# EUROPEAN PATENT APPLICATION

(11) **EP 3 476 984 A1**
(43) Date of publication of application: **01.05.2019**
(21) Application number: 17198637.5
(22) Date of filing: 26.10.2017
(51) Int. Cl.: D01F 1/07, C08K 3/16

(54) **POLYMER MATERIAL WITH FLAME RETARDANT**

(71) Applicant: Polytex Sportbeläge Produktions-GmbH, 47929 Grefrath (DE)
(72) Inventor: SCHMITZ, Dirk, 47652 Weeze (DE); SICK, Stephan, 47877 Willich-Neersen (DE); SANDER, Dirk, 47647 Kerken (DE); JANSEN, Bernd, 41334 Nettetal (DE); LOHR, Ivo, 47906 Kempen (DE)
(74) Representative: Richardt Patentanwälte PartG mbB

(57) **Abstract**

The invention provides for an artificial turf fiber comprising or consisting of polymer material. The polymer material comprises a first flame retardant. The first flame retardant is a salt having a negative enthalpy of solution in water.

## Description

### Field of the invention

The invention relates to artificial turf fibers and sheet-like polymer materials and a corresponding method of producing the fibers and sheet-like polymer materials. The invention further relates to hardly flammable artificial turf fibers and sheet-like polymer materials.

### Background and related art

Artificial turf or artificial grass is a surface that is made up of fibers, which is used to replace grass. The structure of the artificial turf is designed such that the artificial turf has an appearance which resembles grass. Typically artificial turf is used as a surface for sports such as soccer, American football, rugby, tennis, golf, for playing fields, or exercise fields. Furthermore artificial turf is frequently used for landscaping applications.

An advantage of using artificial turf is that it eliminates the need to care for a grass playing or landscaping surface, like regular mowing, scarifying, fertilizing and watering. Watering can be difficult due to regional restrictions for water usage. In other climatic zones the re-growing of grass and re-formation of a closed grass cover is slow due to the damaging of the natural grass surface by playing and/or exercising on the field. Artificial turf fields, though they do not require similar attention and effort to be maintained, may require some maintenance such as having to be cleaned from dirt and debris and having to be brushed regularly. This may be done to help fibers stand up after being pressed down during the play or exercise. Throughout the typical 5-to-15-year lifetime, an artificial turf sports field can withstand high mechanical wear, can resist UV light, can withstand thermal cycling or thermal aging, and can resist interactions with chemicals and various environmental conditions. It is therefore beneficial if the artificial turf has a long usable life, is durable, and keeps its playing and surface characteristics as well as appearance throughout its lifetime.

However, there exist concerns regarding the safety of artificial grass when it comes to whether it is flammable. This is a crucial factor in determining whether artificial grass is the right choice for many scenarios where the risk of fire is particularly relevant. For example, artificial grass used as floor covering of an indoor or outdoor area used for events involving fireworks of any sort or used as floor covering where smoking is permitted should not be flammable. A burning cigarette, even if it does not ignite the artificial turf, can leave undesired burn marks where it is dropped.

Likewise, artificial grass used for landscaping in gardens that are used for barbecues with open fire, for emergency exits or in areas with an increased risk of vandalism and arson attacks should also not be flammable.

Moreover, grass is conventionally made of a synthetic material that can melt at high temperatures. The hot polymer melt can cause severe injuries even if the temperatures are too low to ignite the material. In order to reduce the risk of igniting, artificial turf is often filled with sand, which acts as a type of extinguisher, making the artificial turf fireproof. However, adding sand is not always an option, e.g., in indoor applications or in applications where the sand infill might cause skin injuries or does not provide the desired degree of elasticity. Moreover, the sand might hide logos imprinted on the turf or may simply have mechanical properties that are undesirable in some sports such as hockey.

A further problem is that existing flame retardants like antimony oxide are expensive and need to be added to the flammable material in high amounts. Often, the existing flame retardants are toxic and/or make the polymer material brittle and unsuited for use, e.g., as artificial turf fiber.

European patent EP3088575 discloses an artificial grass that comprises the flame retardant aramid.

### Summary

The invention provides a hardly flammable sheet-like or filamentary polymer material and method of manufacturing the same as specified in the independent claims. Embodiments are given in the dependent claims. Embodiments and examples described herein can be freely combined with each other if they are not mutually exclusive.

In one aspect the invention provides for an artificial turf fiber comprising or consisting of a polymer material. The polymer material comprises a first flame retardant, the first flame retardant being a salt having a negative enthalpy of solution in water.

Using a salt with a negative enthalpy of solution in water may be beneficial if integrated in a polymer material, because polymers are typically combusted into CO2 and water. When a salt having a negative enthalpy of solution dissolves in the water that is generated in a polymer combustion process, the temperature of the water and thus of the polymer is reduced. This may reduce the amount of polymer material that sublimates or evaporates from the solid or liquid polymer material into the air at high temperature and thus may reduce the amount of substrate that can be combusted.

The term "sublimation" is used herein as a generic term to describe a solid-to-gas transition while "evaporation" describes a liquid-to-gas transition. The combustion of hydrocarbon polymers to carbon dioxide and water vapor is not sublimation but a chemical reaction with oxygen. However, this chemical reaction may require the polymers to be in gas phase. By reducing the temperature when the material is in contact with water (e.g., water for firefighting or water as a combustion product), the spreading of a fire may be prevented. Moreover, the first flame retardant may prevent the melting of the polymer and the generation of a hot molten polymer liquid. Even if a liquid mass of a molten polymer has not caught fire, it can cause severe skin burns if it contacts the skin. Hence, adding a salt with a negative enthalpy of solution in water may prevent or at least counteract the ignition of polymers and may prevent or counteract the generation of a hot, liquid polymer mass that may cause injuries and burns upon contact with human skin.

According to embodiments, the polymer material comprises at least 30% of its weight in a hydrocarbon that combusts into CO2 and water. For example, the polymer material can comprise or basically consist of polyethylene (PE), polyamide (PA), polypropylene (PP) or any combination thereof. Polyethylene is the most common plastic. Many kinds of polyethylene are known, with most having the chemical formula (C2H4)n. PE is usually a mixture of similar polymers of ethylene with various values of n. Any of the above-mentioned polymers generate CO2 and water when they are burned.

According to embodiments, the first flame retardant is potassium iodide (KI). The dissolving of potassium iodide in water is an endothermic process. Using KI may be advantageous, as it is comparatively cheap, can be added to the polymer material in large amounts and has a strong negative enthalpy of solution in water. However, other salts with a similar enthalpy of solution in water may likewise be used.

According to embodiments, the first flame retardant is added to the polymer material in an amount of at least 1 %, preferably at least 10%, by weight of the polymer mixture. For example, the first flame retardant can be added in an amount of 1 %-20%, preferably in a range of 8%-12%, e.g., 10%, by weight of the polymer material.

According to embodiments, the polymer material in addition comprises a second flame retardant. The second flame retardant is a reducing agent, preferably, a strong reducing agent. Preferably, the second flame retardant is a strong reducing agent that reacts with oxygen at temperatures above a threshold temperature, whereby the threshold temperature is 100°C or higher. For example, the reducing agent can be an elementary metal, in particular tungsten. Tungsten, also known as wolfram, is an inert, non-toxic metal and a strong reducing agent. Tungsten is oxidized at temperatures above 350°C to tungsten oxide WO₃.

Adding the second flame retardant may be beneficial, because the reducing agent reacts with oxygen, in particular in case the polymer material is heated above a particular temperature, thereby depriving the environmental air of oxygen and suffocating the fire.

In addition, the generated metal oxide may form a metal oxide film that prevents the sublimation and outgassing of further polymer molecules that would feed the flames.

According to embodiments, the polymer material comprises at least 1%, preferably at least 8% by its weight, of the reducing agent.

According to embodiments, the polymer material comprises 8%-12%, e.g., 10% by its weight in tungsten. If another metal with a weaker or higher reductive effect is used, the amount of the other metal is adapted in proportion to the reductive effect achieved by the material.

According to embodiments, the polymer material further comprises a third flame retardant. The third flame retardant is a hindered amine light stabilizer (HALS).

It has been surprisingly observed that HALS light stabilizers do not only have a UV protective effect, but also have a flame retardant effect. By including HALS light stabilizers in a polymer material, the material can be protected against UV degradation and can be made protected against inflammation.

According to embodiments, the polymer material comprises the third flame retardant that also acts as a UV light stabilizer and is free of any further light stabilizer. Using the same substance both as flame retardant and as (the only) light stabilizer may be advantageous, as the production costs of the polymer material may be reduced.

According to embodiments, the HALS light stabilizer is 1,3-propanediamine, N,N-1,2-ethanediylbis-, reaction products with cyclohexane and peroxidized N-butyl-2,2,6,6-tetramethyl-4-piperidinamine-2,4,6-trichloro-1,3,5-triazine reaction products. This substance has assigned the CAS number 191680-81-6 and is commercially available under the name "NOR 116" (BASF).

According to embodiments, the polymer material comprises at least 1%, preferably at least 2% by its weight, of the HALS light stabilizer.

It has been observed that the flame retardant effects of HALS light stabilizers do not occur at HALS concentrations that are typically used when HALSs are used as UV light protectors (far below 1% by weight of the polymer material). However, by using higher concentrations of HALS light stabilizers, both a UV protective effect and a flamer retarding effect can be observed.

According to embodiments, the polymer material comprises the HALS light stabilizer in an amount of 5%-15% by the weight of the polymer material, more preferably n an amount of 7%-13% by the weight of the polymer material.

It has been surprisingly observed that the HALS stabilizer acts as flame retardant only within a particular concentration range. It has been observed that the flame retarding effect of HALS stabilizers at concentrations below 5% and at concentrations above 15% by weight of the polymer material are significantly lower than in the above-specified concentration range.

The physicochemical basis of the flame retardant effect of the HALS light stabilizers is unknown. Possibly, the light stabilizer reduces the ability of polymer molecules to leave the solid polymer material and enter the gas phase. In any case, it has been observed that adding a HALS stabilizer alone (without a salt with endothermic water solubility) may yield only a poor flame retarding effect. Possibly the HALS light stabilizer loses its function if the temperatures rise above a given threshold, and the temperature rise may be prevented or at least slowed by the endothermically soluble salt. The combination of a HALS stabilizer and a salt having a negative enthalpy of solution in water thus provides for a combined, synergistic flame retarding effect.

A combination of the first, the second and the third flame retardant may be particularly advantageous: in case the polymer material is ignited, the material will combust into CO2 and water. However, the flame will not spread over the polymer material, because the endothermically soluble salt will be dissolved in the water. This endothermic process will cool the water and also the polymer material comprising the water. The cooling of the polymer material (in particular in combination with the stabilizing effect of the HALS light stabilizer) will prevent or at least reduce the outgassing of further polymer molecules and thereby will stop or reduce supplying the flames with fuel.

In a further aspect, the invention relates to a silage film, a tent tarpaulin, truck tarpaulin, boat cover, sunscreen or artificial turf fiber or synthetic hybrid turf fiber comprising or consisting of the polymer material of the artificial turf of any one of the embodiments described herein.

Integrating the first and preferably also the second and/or third flame retardant in the above-mentioned products or in any other sheet-like or filamentous polymer products may be particularly advantageous, because these products have a high surface-to-mass ratio. Once such a material is inflamed, the fire can easily spread because the polymer molecules can easily leave the hot plastic material and go into the air over a large surface and thereby feed the flames. The integration of one or more of the flame retardants described herein allows to provide plastic products with a high surface-to-mass ratio which nevertheless are hardly flammable.

According to embodiments, the polymer material is an extrusion product. For example, the polymer material can be a film or a monofilament that is output by an extruder and that is optionally further processed, e.g., sliced, stretched, textured or the like. Using the first and optionally also the second and/or third flame retardant may be advantageous in the context of extrusion processes, because many known flame retardants modify the physicochemical properties of the polymer material such that it may not be suited for an extrusion process anymore, e.g., because the material has become too brittle.

In a further aspect, the invention relates to a method of producing an artificial turf fiber. The method comprises:
- creating a mixture, the creation comprising mixing a polymer and a first flame retardant, the first flame retardant being a salt having a negative enthalpy of solution in water;
- extruding the mixture into a polymer film or into a monofilament; and
- processing the film or the monofilament for transforming the film or monofilament or a fibrillated tape generated from the film into the artificial turf fiber.

For example, the extruded film can be processed for generating a fibrillated tape that can then be transformed into one or more artificial turf fibers.

In a further aspect, the invention relates to a method of producing a sheet-like or filamentary polymer material. The method comprises:
- creating a mixture, the creation comprising mixing a polymer and a first flame retardant to provide the mixture, the first flame retardant being a salt having a negative enthalpy of solution in water; and
- extruding the mixture into a polymer film or into a monofilament or a film.

The monofilament and the film may further be processed, e.g. for generating artificial turf fibers. For example, the film may be transformed into a fibrillated tape and the tape can be transformed into one or more artificial turf fibers.

According to embodiments, at least 30% by weight of the mixture is made of the polymer. The polymer is a hydrocarbon that combusts into CO2 and water. For example, the polymer material can comprise or basically consist of polyethylene (PE), polyamide (PA), polypropylene (PP) or combinations thereof. The polymer material can comprise or basically consist of a polyolefin polymer, a thermoplastic polyolefin polymer, a polyethylene polymer, a polypropylene polymer, a polyamide polymer, a polyethylene polymer blend, and mixtures thereof.

According to embodiments, the creation of the mixture further comprises intermixing a second flame retardant in the mixture. The second flame retardant is a reducing agent, in particular a strong reducing agent/and or a reducing agent that reacts with the oxygen in the air at temperatures above a threshold temperature of 100°C or higher.

According to embodiments, the creation of the mixture further comprises intermixing a third flame retardant in the mixture. The third flame retardant is a HALS light stabilizer.

According to embodiments, the mixture is extruded into the monofilament. The method further comprising:
▪ quenching the monofilament;
▪ reheating the monofilament;
▪ stretching the reheated monofilament;
▪ forming the monofilament into an artificial turf fiber;
▪ incorporating the artificial turf fiber into an artificial turf backing.

According to embodiments, the extruded film or monofilament can be further processed for generating a fibrillated film or tape. A fibrillated film or tape is one that has been processed so that its structure includes fine short fibres, or fibrils, and corresponding holes. Polymer films can be fibrillated either by special cutters and pins, or by more sophisticated methods involving the stretching of the film to cause it to split into multiple localized ruptures.

According to some example embodiments, the 'mixture' or 'polymer mixture' is not a 'master batch,' but a so-called 'compound batch.'

A 'masterbatch' (MB) is a solid or liquid additive for plastic used for coloring plastics (color masterbatch) or imparting other properties to plastics (additive masterbatch). A masterbatch is a concentrated mixture of pigments and/or additives encapsulated during a heat process into a carrier resin which is then cooled and cut into a granular shape. Masterbatch allows the processor to color raw polymer economically during the plastics manufacturing process. Due to the high concentration of the flame retardants (e.g., tungsten: 10%, HALS light stabilizer: 10%, KJ: 12% by weight of the polymer material may amount to 32% flame retardants in total), the flame retardants are typically mixed with one or more polymers (e.g., PE, PA and/or PP), pigments (optional) and further optional additives (which may be provided as master batches) to generate a fully compounded mixture. This fully compounded mixture is heated, cooled and granulated to form a compound batch. The compound batch can then be extruded into a film or a monofilament in a second step. The film or monofilament may be further processed for generating a fibrillated tape.

Alternatively, the fully compounded mixture can be extruded into the film or the monofilament directly in a continuous or discontinuous "1 step" approach. This "1 step" approach may have the advantage that the additional exposure of heat ("heat history") to both the polymers and the flame retardant(s) for generating the compound batch is avoided. This may be important, e.g., for marginally thermally stable pigments.

The final mixing of the components to be extruded can be performed in both approaches in the screw and extrusion part of an extrusion machine.

### Brief description of the drawings

In the following, embodiments of the invention are explained in greater detail, by way of example only, making reference to the drawings in which:
- Fig. 1: shows a flowchart which illustrates an example of a method of manufacturing a hardly inflammable polymer material; and
- Fig. 2: shows a corresponding polymer mixture comprising three different flame retardants.

### Detailed Description

Like-numbered elements in these figures are either equivalent elements or perform the same function. Elements which have been discussed previously will not necessarily be discussed in later figures if the function is equivalent.

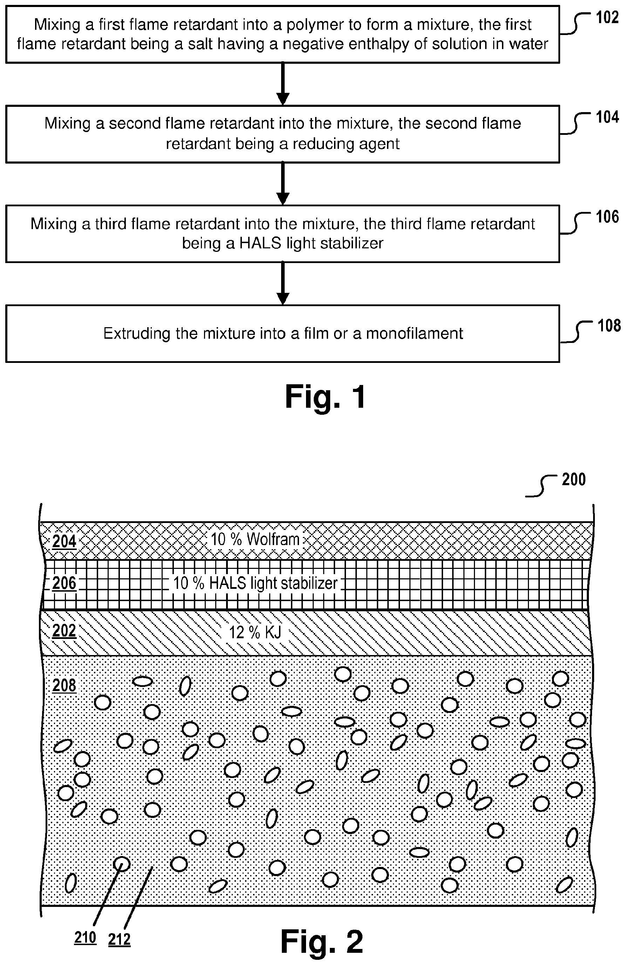

Fig. 1 shows a flowchart which illustrates an example of a method of manufacturing artificial turf. In several steps 102, 104, 106, a polymer mixture such as depicted in figure 2 is created. The method will be described by making reference to the generated polymer mixture depicted in figure 2.

First in step 102 a first flame retardant 202, a salt having a negative enthalpy of solution in water, e.g., KI, is added to one or more polymers 208. The polymer 208 can be a single-type polymer or a polymer comprising additives or a blend of multiple different polymers, e.g., a blend of LLDPE and HDPE. In the example depicted in figure 2, the polymer fraction 208 of the mixture 200 is an emulsion of droplets 210 of a stabilizing polymer within a bulk polymer 212. Optionally, the polymer fraction 208 can comprise a compatibilizer (not shown). In some instances the stabilizing polymer 210 may be immiscible in the bulk polymer 212 ,and therefore the stabilizing polymer droplets are surrounded by the compatibilizer. According to embodiments, the stabilizing polymer is a polar polymer, e.g., polyamide, and the bulk polymer is an non-polar polymer, e.g., PE. According to some embodiments, the polymer fraction 208 in addition comprises fibers of aramid (not shown). In other examples there may be additional polymers in the polymer phase 208 that are also immiscible with the bulk polymer 212. There also may be additional compatibilizers which are used either in combination with the stabilizing polymer 210 or the additional third, fourth, or fifth polymer. The stabilizing polymer forms polymer beads (or droplets) 210 surrounded by the compatibilizer. The polymer beads may also be formed by additional polymers which are not miscible in the bulk polymer. The polymer beads are also surrounded by the compatibilizer and are within the bulk polymer or mixed into the bulk polymer.

In the next step 104, a second flame retardant, a reducing agent, e.g., elementary tungsten 204, is added to the mixture 200.

In the next step 106, a third flame retardant, a HALS light stabilizer 206, is added to the mixture 200. The order of adding the flame retardants 204, 206, 202 to the mixture is irrelevant, so all flame retardants can be mixed with the polymer fraction 208 simultaneously or in a different order than described above.

In addition, pigments and/or further additives can be added to the mixture. The mixture is then thoroughly stirred and mixed to achieve a homogeneous distribution of all components of the mixture. The mixing is typically performed at high temperatures to ensure that all polymers 210, 212 are in liquid phase and can be homogeneously mixed, whereby the emulsion of the stabilizing polymer in the bulk polymer is maintained.

In the next step 108, the mixture 200 is extruded into a monofilament or a film. For example, the monofilament can be further processed for generating a monofilament or monofilament assembly that can be used as an artificial grass fiber. The film can be further processed to form tent or truck tarps or other sheet-like plastic material. The film can also be split into slices that can be further processed for generating artificial turf fibers. The extrusion process may stretch the stabilizing polymer beads, if any, into threadlike regions which increase the resilience of the generated monofilaments.

For example, the processing of a monofilament can comprise quenching or rapidly cooling the extruded monofilament. Then, the cooled monofilament is reheated and the reheated monofilament is stretched. This causes the molecules of the stabilizing polymer to become aligned with each other in the direction that the fibers are stretched. The stretching deforms the polymer beads into thread-like regions.

Additional steps may also be performed on the monofilament to form the artificial turf fiber. For instance, the film can be processed for generating a fibrillated tape and/or the fibrillated tape or the monofilament may be spun or woven into a yarn with desired properties.

Finally, the stretched monofilament is formed into the artificial turf fiber that may be tufted or otherwise integrated in a backing to form the artificial turf.

The integration of the fiber could be, but is not limited to, tufting or weaving the artificial turf fiber into an artificial turf backing. Then the artificial turf fibers are bound to the artificial turf backing. For instance, the artificial turf fibers may be glued or held in place by a coating or other material.

By stating that the stabilizing polymer and the bulk polymer are immiscible, it is meant that the stabilizing polymer is immiscible with at least a majority of the components that make up the bulk polymer. For example, the bulk polymer could be made of one polymer that is immiscible with the stabilizing polymer and then have a smaller portion of the bulk polymer made from a second polymer that is or may be at least partially immiscible with the stabilizing polymer.

According to some embodiments, the stabilizing polymer is aramid. The polymer aramid has very good structural and temporal temperature stability. Aramid is a polar molecule. Some variants of aramid are also known by the trade name of Kevlar.

According to embodiments, further flame retardants are added to the polymer mixture 200, e.g., triazine and/or melamine. Both triazine and melamine are non-polar molecules. Triazine and melamine are therefore immiscible with the bulk polymer. In the case of fire, the triazine and melamine combination forms an intumescence layer on the surface of a monofilament which extinguishes the fire. The combination of the first, second and/or third flame retardants with said additional flame retardants and/or with the flame retardant stabilizing polymer aramid increases the fire resistance of fibers formed from the polymer mixture. This is because the aramid has extremely good thermal stability and even if the bulk polymer is melting or burning, the aramid will retain its shape and prevent any fibers from deforming or losing their shape and melting completely. The intumescence layer covers the surface of any artificial turf fibers or monofilaments and thus if the monofilament or fibers used to make the artificial turf melt, then the intumescence layer is less effective in stopping a fire. The stabilizing polymer therefore increases the effectiveness of the intumescence layer in stopping a fire. The first, second and/or third flame retardants reduce the temperature, thereby reducing the availability of polymers in the gas phase, and reduce the oxygen concentration in the air, thereby preventing any fire from spreading.

According to embodiments, the polymer mixture 200 to be extruded and to form the polymer material is a combination of a mixture or blend of polymers of different types, e.g., of polar polymers (e.g., PA) and apolar polymers (e.g., PE). The bulk polymer can be an non-polar polymer or a combination of both polar and non-polar polymers. The bulk polymer may have a compatibilizer to enable the non-polar and polar polymers to be mixed. In the case where the bulk polymer is made of a mixture of non-polar and polar polymers, the majority of the bulk polymer by weight is non-polar, e.g., PE-based. In another embodiment, the bulk polymer comprises any one of the following: a non-polar polymer, a polyolefin polymer, a thermoplastic polyolefin polymer, a polyethylene polymer, a polypropylene polymer, a polyamide polymer, a polyethylene polymer blend, and mixtures thereof.

In another embodiment, the polymer bulk comprises a first polymer, a second polymer, and the compatibilizer. The first polymer and the second polymer are immiscible. The first polymer forms polymer beads surrounded by the compatibilizer within the second polymer. The terms 'polymer bead' and 'beads' may refer to a localized region, such as a droplet, of a polymer that is immiscible in the second polymer. The polymer beads may in some instances be round or spherical or oval-shaped, but they may also be irregularly shaped. In some instances, the polymer bead will typically have a size of approximately 0.1 to 3 micrometers, preferably 1 to 2 micrometers in diameter. In other examples, the polymer beads will be larger. They may, for instance, have a size with a diameter of a maximum of 50 micrometers.

In one embodiment, the polymer bulk by weight comprises more second polymer than first polymer.

In another embodiment, the second polymer is a non-polar polymer and the first polymer is a polar polymer. This embodiment may be beneficial because it may provide a way of tailoring the texture and feel of the monofilaments used to make the artificial turf.

In another embodiment, stretching the reheated monofilament deforms the polymer beads into thread-like regions. In this embodiment, the stretching of the monofilament not only aligns the aramid fibers but also stretches the polymer beads into thread-like regions which may also aid in changing the structure of the monofilament.

According to embodiments, the thread-like regions generated by the extrusion and stretching steps can have a diameter of less than 20 micrometers, in some embodiments less than 10 micrometers. In another embodiment, the thread-like regions have a diameter of between 1 and 3 micrometers. In another embodiment, the artificial turf fiber extends a predetermined length beyond the artificial turf backing. The thread-like regions have a length less than one half of the predetermined length. In another embodiment, the thread-like regions have a length of less than 2 mm.

**Fig. 2** shows a mixture 200 comprising 12% potassium iodide 202 as the first flame retardant, 10% elementary tungsten 204 as the second flame retardant, and 10% HALS light stabilizer as the third flame retardant. The rest, about 68% per weight of the mixture 200, consists of a polymer component 208 which may comprise some further additives, e.g., pigments, fungicides, and the like. In the depicted example, the polymer fraction is an emulsion of a polar stabilizing polymer 210, e.g., aramid or PA, in an non-polar bulk polymer, e.g., PE.

### Listofreferencenumerals

- 102-108: steps
- 200: polymer mixture
- 202: first flame retardant
- 204: second flame retardant
- 206: third flame retardant
- 208: polymer portion of the polymer mixture
- 210: stabilizer polymer
- 212: bulk polymer

## Claims

1. An artificial turf fiber comprising or consisting of a polymer material, the polymer material comprising a first flame retardant, the first flame retardant being a salt having a negative enthalpy of solution in water.

2. The artificial turf fiber of claim 1, the polymer material comprising at least 30% of its weight a hydrocarbon that combusts into CO2 and water.

3. The artificial turf fiber of any one of the previous claims, the first flame retardant being potassium iodide.

4. The artificial turf fiber of any one of the previous claims, the polymer material comprising a second flame retardant, the second flame retardant being a reducing agent.

5. The artificial turf fiber of claim 4, the reducing agent being a reducing agent that reacts with oxygen at temperatures above a threshold temperature, the threshold temperature being 100°C or higher.

6. The artificial turf fiber of claim 4 or 5, the reducing agent being an elementary metal.

7. The artificial turf fiber of claim 6, the elementary metal being tungsten.

8. The artificial turf fiber of any one of claims 4-7, the polymer material comprising at least 1%, preferably at least 8% by its weight of the reducing agent.

9. The artificial turf fiber of any one of the previous claims, the polymer material comprising at least 1%, preferably at least 8% by its weight of the first flame retardant.

10. The artificial turf fiber of any one of the previous claims, the polymer material comprising a third flame retardant, the third flame retardant being a hindered amine light stabilizer (HALS).

11. The artificial turf fiber of claim 10, the HALS light stabilizer being 1,3-propanediamine, N,N-1,2-ethanediylbis-, reaction products with cyclohexane and peroxidized N-butyl-2,2,6,6-tetramethyl-4-piperidinamine-2,4,6-trichloro-1,3,5-triazine reaction products.

12. The artificial turf fiber of any one of claims 10-11, the polymer material comprising at least 1%, preferably at least 2% by its weight the HALS light stabilizer.

13. The artificial turf fiber of any one of claims 10-11, the polymer material comprising the HALS light stabilizer in an amount of 5%-15% by the weight of the polymer material, more preferably in an amount of 7%-13% by the weight of the polymer material.

14. A method of producing an artificial turf fiber comprising:
• creating a mixture, the creation comprising mixing a polymer and a first flame retardant, the first flame retardant being a salt having a negative enthalpy of solution in water;
• extruding the mixture into a polymer film or into a monofilament; and
• processing the film or the monofilament or a fibrillated tape generated from the film for transforming the film or the monofilament or the fibrillated tape into the artificial turf fiber.

15. The method of claim 14, wherein at least 30% by weight of the mixture is made of the polymer, the polymer being a hydrocarbon that combusts into CO2 and water.

16. The method of any one of the previous claims 14-15, the creation of the mixture further comprising:
• intermixing a second flame retardant in the mixture, the second flame retardant being a reducing agent; and/or
• intermixing a third flame retardant in the mixture, the third flame retardant being a HALS light stabilizer.

17. The method of any one of the previous claims 14-16,
• the mixture being extruded into the monofilament, the method further comprising:
• quenching the monofilament;
• reheating the monofilament;
• stretching the reheated monofilament;
• forming the monofilament into an artificial turf fiber;
• the mixture being extruded into the film, the method further comprising:
• transforming the film into a fibrillated tape;
• forming the fibrillated tape into the artificial turf fiber;
• the method further comprising incorporating the artificial turf fiber into an artificial turf backing.

18. A silage film, a tent tarpaulin, truck tarpaulin, boat cover, sunscreen or artificial turf fiber or synthetic hybrid turf fiber comprising or consisting of the polymer material of the artificial turf fiber according to any one of claims 1-13.

19. A method of producing a sheet-like or filamentary polymer material, the method, the method comprising:
• creating a mixture, the creation comprising mixing a polymer and a first flame retardant, the first flame retardant being a salt having a negative enthalpy of solution in water; and
• extruding the mixture into a polymer film or into a monofilament.

## Amended claims

### Amended claims in accordance with Rule 137(2) EPC.

1. An artificial turf fiber comprising or consisting of a polymer material,
the polymer material comprising a first flame retardant, the first flame retardant being a salt having a positive enthalpy of solution in water,
the polymer material comprising at least 30% of its weight a hydrocarbon that combusts into CO2 and water,
the polymer material comprising a second flame retardant, the second flame retardant being a reducing agent that reacts with oxygen at temperatures above a threshold temperature, the threshold temperature being 100°C or higher, the reducing agent being an elementary metal.

2. The artificial turf fiber of any one of the previous claims, the first flame retardant being potassium iodide.

3. The artificial turf fiber of any one of the previous claims, the elementary metal being tungsten.

4. The artificial turf fiber of any one of the previous claims, the polymer material comprising at least 1%, preferably at least 8% by its weight of the reducing agent.

5. The artificial turf fiber of any one of the previous claims, the polymer material comprising at least 1%, preferably at least 8% by its weight of the first flame retardant.

6. The artificial turf fiber of any one of the previous claims, the polymer material comprising a third flame retardant, the third flame retardant being a hindered amine light stabilizer (HALS).

7. The artificial turf fiber of claim 6, the HALS light stabilizer being 1,3-propanediamine, N,N-1,2-ethanediylbis-, reaction products with cyclohexane and peroxidized N-butyl-2,2,6,6-tetramethyl-4-piperidinamine-2,4,6-trichloro-1,3,5-triazine reaction products.

8. The artificial turf fiber of any one of claims 6-7, the polymer material comprising at least 1%, preferably at least 2% by its weight the HALS light stabilizer.

9. The artificial turf fiber of any one of claims 6-8, the polymer material comprising the HALS light stabilizer in an amount of 5%-15% by the weight of the polymer material, more preferably in an amount of 7%-13% by the weight of the polymer material.

10. A method of producing an artificial turf fiber comprising:
• creating a mixture, the creation comprising mixing a polymer, a first flame retardant and a second flame retardant, the first flame retardant being a salt having a positive enthalpy of solution in water, the second flame retardant being a reducing agent that reacts with oxygen at temperatures above a threshold temperature, the threshold temperature being 100°C or higher, the reducing agent being an elementary metal, wherein at least 30% by weight of the mixture is made of the polymer, the polymer being a hydrocarbon that combusts into CO2 and water;
• extruding the mixture into a polymer film or into a monofilament; and
• processing the film or the monofilament or a fibrillated tape generated from the film for transforming the film or the monofilament or the fibrillated tape into the artificial turf fiber.

11. The method of any one of the previous claims 10-11, the creation of the mixture further comprising:
• intermixing a second flame retardant in the mixture, the second flame retardant being a reducing agent; and/or
• intermixing a third flame retardant in the mixture, the third flame retardant being a HALS light stabilizer.

12. The method of any one of the previous claims 10-12,
• the mixture being extruded into the monofilament, the method further comprising:
• quenching the monofilament;
• reheating the monofilament;
• stretching the reheated monofilament;
• forming the monofilament into an artificial turf fiber;
• the mixture being extruded into the film, the method further comprising:
• transforming the film into a fibrillated tape;
• forming the fibrillated tape into the artificial turf fiber;
• the method further comprising incorporating the artificial turf fiber into an artificial turf backing.
